# EUROPÄISCHE PATENTANMELDUNG

(11) **EP 4 124 772 A1**
(43) Veröffentlichungstag der Anmeldung: **01.02.2023**
(21) Anmeldenummer: 22186367.3
(22) Anmeldetag: 22.07.2022
(51) Int. Cl.: F16D 65/00, F16D 55/00

(54) **BREMSSATTEL MIT EINER BLENDE UND EINER FIXIERSCHEIBE**

(30) Priorität: 28.07.2021 DE 102021119548; 26.04.2022 DE 102022110050
(71) Anmelder: ZF Active Safety GmbH, 56070 Koblenz (DE)
(72) Erfinder: Schwenzer, Philipp, 56220 Urmitz (DE); Zenzen, Guido, 56290 Macken (DE); Rössinger, Florian, 56564 Neuwied (DE); Becker, Marco, 56651 Oberduerenbach (DE)

(57) **Zusammenfassung**

Die vorliegende Erfindung betrifft einen Bremssattel (1) für eine Scheibenbremse umfassend
- eine Tragkonstruktion (2) mit einer Brücke (3) und wenigstens einem Brückenfinger (4), welcher eine Bremsbelagseite (5), eine Außenseite (6) und eine in die Außenseite (6) eingebrachte Bohrung (7) aufweist, die von der Außenseite (6) in Richtung der Bremsbelagseite (5) verläuft,
- eine Blende (40) mit einem in die Bohrung (7) ragenden Zapfen (43)
- eine Fixierscheibe (20) mit einem Scheibenrand (21), welcher einen Außendurchmesser D hat und welcher in der Bohrung (7) formschlüssig gehalten wird und mit einer Scheibenmitte (22), die eine Durchgangsöffnung (25), insbesondere kreisförmige Durchgangsöffnung (25), durch welche der Zapfen (43) hindurchragt, aufweist,
wobei die Scheibenmitte (22) einen gegenüber dem Scheibenrand (21) in Richtung der Bremsbelagseite (5) ausgebuchteten Klemmbereich (26) aufweist, welcher den Zapfen (43) in der Durchgangsöffnung (25) mit einer Klemmkante (27), insbesondere einer kreisförmigen Klemmkante (27) festklemmt. Ferner Betrifft die Erfindung eine solche Fixierscheibe (20).

## Beschreibung

Die Erfindung betrifft einen Bremssattel für eine Scheibenbremse mit einer an der Tragkonstruktion des Bremssattels, insbesondere an dem oder den Brückenfingern der Tragkonstruktion, befestigten Blende. Ferner betrifft die Erfindung eine Fixierscheibe für einen solchen Bremssattel

Scheibenbremsen werden verbreitet als Radbremsen bei Fahrzeugen eingesetzt. Entsprechend der Radgestaltung sind häufig Teile der Scheibenbremse hindurch sichtbar. Bei der Verwendung von Schwimmsattelscheibenbremsen ist ein Teil des Schwimmsattels und hier wiederum ein Teil der Brücke und die Brückenfinger durch die Radkonstruktion sichtbar. Die Brückenfinger oder ggf. Zwischenräume zwischen den Brückenfingern können durch eine an den Bremssattel, insbesondere an die Brückenfinger, montierte Blende, auch als Logo-Platte bekannt, abgedeckt werden. Eine solche Blende erfüllt Schutzfunktionen (z.B. Staubschutz) und bietet eine Fläche für eine Aufschrift oder ein Logo, bspw. ein Firmen-Logo.

Aus dem Stand der Technik sind verschiedene Lösungen zur Befestigung einer solchen Blende an einem Bremssattel bekannt.

Die DE102006033240B4 offenbart eine schraubenlose Befestigung eines (gegossenen) Firmenmarkenzeichens an einem Bremssattel.

In der DE102013020750A1 ist beschrieben, dass die Befestigung eines Kennzeichnungsteils mit einem stiftförmigen Fortsatz, welcher ausschließlich durch Reibungskräfte fixiert wird, erfolgen kann.

Die DE102018221931A1 offenbart einen Bremssattel mit einer an einem Grundkörper befestigten Blende.

Der Erfindung liegt dementsprechend die Aufgabe zugrunde, eine Befestigungslösung für einen Bremssattel der eingangs bezeichneten Art bereitzustellen, bei der die Blende sicher und dauerhaft gehalten wird und in einfacher Weise montierbar ist.

Gemäß einem ersten Aspekt der Erfindung erfolgt die Lösung dieser Aufgabe durch einen Bremssattel für eine Scheibenbremse mit den Merkmalen des Patentanspruchs 1. Die Gegenstände der Unteransprüche 2 bis 14 betreffen bevorzugte Ausführungsformen der Erfindung. Gemäß einem zweiten Aspekt der Erfindung erfolgt die Lösung durch eine Fixierscheibe mit den Merkmalen des Patentanspruchs 15.

Der erste Aspekt der Erfindung bezieht sich auf den Bremssattel. Der erfindungsgemäße Bremssattel für eine Scheibenbremse umfasst eine Tragkonstruktion mit einer Brücke und wenigstens einem Brückenfinger, welcher eine Bremsbelagseite, eine Außenseite und eine in die Außenseite eingebrachte Bohrung aufweist, die von der Außenseite in Richtung der Bremsbelagseite verläuft. Ferner umfasst der Bremssattel eine Blende mit einem in die Bohrung ragenden Zapfen und eine Fixierscheibe mit einem Scheibenrand, welcher einen Außendurchmesser hat und welcher in der Bohrung formschlüssig gehalten wird und mit einer Scheibenmitte, die eine Durchgangsöffnung, durch welche der Zapfen hindurchragt, aufweist. Vorzugsweise ist die Durchgangsöffnung kreisförmig ausgebildet. Die Scheibenmitte weist einen gegenüber dem Scheibenrand in Richtung der Bremsbelagseite ausgebuchteten Klemmbereich auf, welcher den Zapfen in der Durchgangsöffnung mit einer Klemmkante festklemmt. Die Klemmkante hat vorzugsweise einen kreisförmigen Verlauf.

Die Ausbuchtung bewirkt zum einen, dass der Zapfen bei der Montage der Blende an den Bremssattel leichter durch die Durchgangsöffnung der Fixierscheibe geschoben werden kann und zum anderen, dass der Klemmbereich mit der Klemmkante einem unerwünschten Herausrutschen des Zapfens aus der Bohrung entgegenwirkt. Ein kreisförmiger Verlauf der Klemmkante stellt einen günstigen Kontaktverlauf zwischen Klemmkante und Zapfen bereit. D.h. die Klemmkante klemmt nicht nur punktuell gegen den Zapfen, sondern sie hat mit der Zapfenumfangsfläche einen zumindest abschnittsweise übereinstimmenden Verlauf. Die Ausbuchtung gibt der Fixierscheibe außerdem Stabilität. Durch den Formschluss zwischen Fixierscheibe und Bohrung, wird die Fixierscheibe gegen ein Lösen in axialer Richtung entlang der Bohrungslängsachse in der Bohrung gehalten. Somit wird auch die Blende an der Tragkonstruktion sicher gehalten.

Vorzugsweise wird der Formschluss zwischen Fixierscheibe und Bohrung dadurch erzielt, dass die Bohrung eine Nut, insbesondere eine Ringnut, aufweist, in welcher der Scheibenrand eingreift.

Gemäß einer weiteren bevorzugten Ausführungsform weist die Bohrung zwischen der Außenseite und der Nut einen Abschnitt auf, in welchem sich die Bohrung in Richtung der Bremsbelagseite verjüngt. Vorzugsweise weist die Verjüngung eine konische Form auf. Aufgrund dieser Ausgestaltung ergibt sich eine günstige Montagesituation um die Fixierscheibe in die Einrastposition in die Nut zu bringen. Dies kann bspw. in der Weise geschehen, dass die Fixierscheibe mit Hilfe eines Montagedorns über den sich verjüngenden Bohrungsabschnitt in die Nut gezwungen wird und der Scheibenrand in der Nut einrastet.

Alternativ oder zusätzlich zu dem vorgenannten sich verjüngenden Bohrungsabschnitt kann die Bohrung zwischen der Nut und der Bremsbelagseite einen Abschnitt aufweisen, in welchem sich die Bohrung in Richtung der Bremsbelagseite verjüngt. Auch hier ist eine konische Form als ein geeigneter Verjüngungsverlauf zu nennen.

Eine solche Verjüngung schützt die Fixierscheibe vor einem übermäßigen Aufbiegen des ausgebuchteten Klemmbereichs oder vor einem Durchrutschen in Richtung der Bremsbelagseite bei der Montage.

Darüber hinaus ist es vorteilhaft, wenn die Bohrung in dem Abschnitt zwischen der Außenseite und der Nut, einen zylindrischen Bohrungsabschnitt aufweist, der zwischen der zuerst genannten Verjüngung und der Nut angeordnet ist. Bevorzugt ist es hierbei, wenn die axiale Erstreckung des zylindrischen Bohrungsabschnitts kleiner oder gleich der axialen Erstreckung der Verjüngung ist.

Der zylindrische Bohrungsabschnitt sorgt für eine ausreichende Festigkeit der Nutwand, welche entgegen der Auszugrichtung des Zapfens aus der Bohrung den nötigen Halt bieten muss. Durch den zylindrischen Bohrungsabschnitt ist gewährleistet, dass die betreffende Nutwand aufgrund von Fertigungstoleranzen in ihrer Tragfläche nicht geschwächt wird. Eine zu große axiale Erstreckung des zylindrischen Bohrungsabschnitts würde wiederum die Montage erschweren.

Hinsichtlich der Verjüngung, die sich in dem Bohrungsabschnitt zwischen der Nut und der Bremsbelagseite befindet, ist es hingegen vorteilhaft, wenn sich diese Verjüngung unmittelbar an die Nut anschließt, um den schon beschriebenen Schutz vor einem übermäßigen Aufbiegen des ausgebuchteten Klemmbereichs oder vor einem Durchrutschen der Fixierscheibe bei Montage in Richtung der Bremsbelagseite in günstiger Weise zu erzielen.

Bevorzugt ist die Fixierscheibe, wie folgt, gestaltet: Der Scheibenrand weist einen Außendurchmesser D auf. Die Fixierscheibe weist eine Materialdicke t auf, die sich von einer ersten Seite hin zu einer zweiten Seite der Fixierscheibe erstreckt und die Fixierscheibe weist eine Höhe H auf, welche aufgrund des ausgebuchteten Klemmbereichs größer ist als die Materialdicke t. Eine solche Formgebung lässt sich idealerweise mit dem Tiefziehverfahren aus einem entsprechenden Blechzuschnitt herstellen. Bevorzugt ist die Fixierscheibe auf diese Weise hergestellt.

Der ausgebuchtete Klemmbereich weist vorzugsweise die Form eines hohlen Kegelstumpfes auf, wobei der Kegelöffnungswinkel α in einem nicht montierten Zustand der Fixierscheibe bevorzugt zwischen 100° und 140° und noch bevorzugter zwischen 110° und 130° liegt. Diese Gestaltungsform führt dazu, dass der Klemmbereich in montiertem Zustand eine gute Klemmwirkung auf den Zapfen ausübt und/oder sich die Klemmkante sogar in die Zapfenoberfläche eindrücken kann. Da der Kegelöffnungswinkel im montierten Zustand von der Geometrie der Bohrung und des Zapfens abhängig ist, beziehen sich die vorstehend genannten Winkelbereiche auf die Fixierscheibe in einem nicht montierten Zustand.

Vorzugsweise ist der Scheibenrand zwischen dem Außendurchmesser D und dem ausgebuchteten Klemmbereich ringförmig mit einer Höhe HRing, die gleich der Materialdicke t ist, ausgebildet. Somit hat der Scheibenrand eine definierte, konstante Höhe, der entsprechend eine Dimensionierung der korrespondierenden Formschlussaufnahme in der Bohrung, insbesondere einer Nut, gut möglich ist.

In einer besonders bevorzugten Ausführung verläuft wenigstens ein ausgehend von der Durchgangsöffnung in Richtung des Scheibenrands verlaufender Einschnitt den ausgebuchteten Klemmbereich hinein. Dabei bildet der Einschnitt entlang der Klemmkante einen Unterbrechungsabschnitt, der sich über einen Winkel δ erstreckt und einen Klemmkantenabschnitt, der sich über einen Winkel γ erstreck. Es ist klar, dass in dem Unterbrechungsabschnitt die Klemmkante unterbrochen ist und dass in diesem Abschnitt kein direkter Kontakt der Klemmkante mit dem Zapfen besteht. Hingegen klemmt die in dem Klemmkantenabschnitt vorhandene Klemmkante gegen den Zapfen. Der wenigstens eine Einschnitt verläuft vorzugsweise radial nach außen. Der radiale Verlauf bezieht sich auf den Mittelpunkt M der Fixierscheibe. Der Einschnitt durchtrennt die Fixierscheibe im äußeren Bereich nicht. D.h. der Einschnitt befindet sich im ausgebuchteten Klemmbereich.

Der Winkel γ ist größer als der Winkel δ . Vorzugsweise ist der Winkel γ mindestens zwei Mal größer als der Winkel δ . Noch bevorzugter ist der Winkel γ mindestens drei Mal größer als der Winkel δ. Durch die größeren Klemmkantenanteile ergibt sich ein besonders sicherer Halt für die Blende. Trotz Unterbrechung(en) ist auf diese Weise umlaufend um den Zapfen ein hoher Anteil an klemmender Klemmkante gegeben. Die angegebenen Winkel γ und δ haben ihren Scheitelpunkt jeweils deckungsgleich auf dem Mittelpunkt der Fixierscheibe liegen. Vorzugsweise können, gemäß der oben beschriebenen Gestaltung des wenigstens einen Einschnitts, mehrere Einschnitte und somit entsprechend mehrere Unterbrechungsabschnitte und Klemmkantenabschnitte vorgesehen werden.

Besonders bevorzugt ist eine Ausführung der Fixierscheibe, bei welcher, gemäß der oben beschriebenen Gestaltung des wenigstens einen Einschnitts, fünf Einschnitte und somit entsprechend fünf Unterbrechungsabschnitte und fünf Klemmkantenabschnitte vorhanden sind.

Bei einer Ausführung mit mehreren Einschnitten sind die Einschnitte bevorzugt gleichmäßig verteilt entlang der Klemmkante angeordnet, d.h. alle Winkel γ sind untereinander gleich groß und alle Winkel δ sind untereinander gleich groß.

Durch den Einschnitt oder die Einschnitte bilden sich ein Klemmabschnitt oder mehrere Klemmabschnitte, die jeweils mit einem Klemmkantenabschnitt auf den Zapfen drücken. Die Klemmkantenabschnitte können sich auch in die Zapfenumfangsfläche des Zapfens hineindrücken. Die Klemmabschnitte sind gleich Federschenkel, die aufgrund von elastischer Verformung eine Klemmkraft aufbringen und so eine Klemmkraft auf den Zapfen aufbringen. Zumindest sind die Klemmabschnitte in einem bestimmten Auslenkbereich elastisch auslenkbar.

Durch den Einschnitt oder die Einschnitte wird die Fixierscheibe flexibler elastisch verformbar. Dies erleichtert die Montage und erhöht die Funktionssicherheit, d.h. Haltesicherheit auch bei möglichen Fertigungstoleranzen.

Bevorzugt sind die Klemmabschnitte so ausgerichtet, dass sie jeweils einen Winkel β mit der Zapfenlängsachse bilden, wobei das Winkelmaß des Winkels β zwischen 45° und 70° liegt. Diese Angaben beziehen sich auf den Zustand, in welchem die Fixierscheibe in der Bohrung und auf dem Zapfen montiert ist.

Durch diese Ausrichtung greifen die Klemmabschnitte unter einem Winkel an der Zapfenoberfläche an, bei dem die Klemmkante optimal gegen die Zapfenoberfläche drückt und ein Lösen des Zapfens und somit der Blende verhindert. Diese Ausrichtung ermöglicht sogar ein hineindrücken oder hineinschneiden der Klemmkante in die Zapfenoberfläche, ähnlich, wie ein Schneidkeil beim Zerspanungsvorgang in ein Werkstück eindringt, mit dem Unterschied, dass es vorliegend nur bis zum Eindrücken kommt und dass kein Material vom Zapfen abgetragen wird.

Vorzugsweise nimmt die Breite des Einschnitts oder der Einschnitte ausgehend von der Durchgangsöffnung in Richtung des Scheibenrands ab. Dadurch werden die Klemmabschnitte steifer und erzielen eine höhere Klemmkraft.

Vorzugsweise ist die tiefste Stelle des Einschnitts oder der Einschnitte halbrundförmig ausgebildet. D.h. die Seitenflanken des Einschnitts laufen tangential in diesen halbrundförmigen Einschnittgrund ein. Diese Ausgestaltung erhöht insbesondere die Dauerfestigkeit des Bauteils im Hinblick auf die Schwingungsbelastung im Bereich der Bremse. Dies begünstigt wiederum einen dauerhaften Halt. Diese Ausgestaltung ist vorzugsweise damit kombiniert, dass sich der Einschnitt oder die Einschnitte nicht in die gesamte Ausbuchtung hineinziehen und nicht komplett bis an den Scheibenrand grenzen, sondern dass die tiefste Stelle des Einschnitts oder der Einschnitte innerhalb der Ausbuchtung liegt. Dadurch wird nochmals die Steifigkeit und somit die Haltesicherung der Blende erhöht. Der Vorteil liegt darin, dass die Fixierscheibe sich bei der Montage aufgrund einer guten Steifigkeit nicht in unerwünschter Weise verbiegt. So lässt sich gut montieren.

Bevorzugt ist es, wenn die Fixierscheibe einen die Materialdicke durchtrennenden und von der Durchgangsöffnung bis zum Außendurchmesser D durchlaufenden Schlitz aufweist. Bei einem nicht in die Bohrung und nicht auf den Zapfen montierten Zustand der Fixierscheibe, weist der Schlitz, gemessen an dem Übergang zur Durchgangsöffnung, eine Breite b1 auf. Bei einem in die Bohrung und auf den Zapfen montierten Zustand der Fixierscheibe, weist der Schlitz, gemessen an dem Übergang zur Durchgangsöffnung, eine Breite b2 auf. b2 ist bevorzugt kleiner als b1. Der Schlitz ist bei einer vorteilhaften Ausführung keilförmig ausgebildet. Entsprechend keilförmig sind die Schlitzkanten der Fixierscheibe zueinander ausgerichtet. Sie verlaufen in einer vorteilhaften Ausgestaltung jeweils radial auf den Fixierscheibenmittelpunkt M zu.

Durch diesen Schlitz ist ein leichteres Einsetzen der Fixierscheibe in die Formschlussaufnahme der Bohrung, insbesondere der Nut, möglich.

Bevorzugt ist der Schlitz im Bereich bzw. im Verlauf eines Klemmkantenabschnitts angeordnet, wodurch dieser Klemmkantenabschnitt durchtrennt wird.

In einer besonders geeigneten Ausgestaltung verjüngt sich der Zapfen ausgehend von der Anlageseite hin zu dem Zapfenende in einem Haltebereich, welcher sich über eine Länge L2 erstreckt. In diesem Haltebereich hat die Fixierscheibe, bzw. die Klemmkante der Fixierscheibe im fertig montierten Zustand Klemmkontakt mit dem Zapfen. Diese Verjüngung hat den Vorteil, dass sich die Bauteile leichter montieren lassen. D.h. der Zapfen kann so leichter durch die Durchgangsöffnung geschoben werden. Lässt sich der Zapfen zunächst mit seinem Zapfenende leicht in die Durchgangsöffnung einführen, so entfaltet sich dennoch aufgrund der zunehmenden Zapfenstärke oder des Zapfendurchmessers ein fester Sitz in der Endmontageposition des Zapfens. Dies trägt dazu bei, dass die Klemmabschnitte bei der Montage auch nicht unnötig weit aufgebogen werden, wenn z.B. die Montage mit einer gewissen Prozessgeschwindigkeit erfolgt, sondern die Klemmabschnitte werden bei der Montage nicht überdehnt und haben so in der montierten Endposition die beste Klemmkraft.

Der Zapfen hat eine Gesamtlänge L1. Bevorzugt hat der Haltebereich mit seiner Länge L2 den größten längenmäßigen Anteil an der Gesamtlänge L1. Auf diese Weise ist der oben beschriebenen Montagevorteil (leichtes Einführen des Zapfenendes, sicherere Halt im Haltebereich und Vermeidung der Überdehnung der Klemmabschnitte) gut zu erreichen. In dieser Hinsicht ist das Längenverhältnis von L2 zu L1 bevorzugt größer als 0,5, bevorzugter größer oder gleich 0,6 und noch bevorzugter größer oder gleich 0,7.

Bevorzugt hat die Verjüngung eine konische Form, wobei die konisch verlaufenden Flanken in der Darstellung einer Parallelprojektion einen Winkel ϕ einschließen. Bevorzugt ist der Winkel ϕ größer oder gleich 1° und kleiner oder gleich 3°.

Die sich verjüngende Form ist besonders in Verbindung mit der relativ steif ausgestalteten Fixierscheibe, mit den verhältnismäßig zur Einschnittbreite der Einschnitte breit ausgestalteten Klemmabschnitten mit ihren Klemmkantenabschnitten, geeignet, da die Klemmabschnitte durch die Konusform des Zapfens quasi nach dem Keilprinzip auseinandergedrückt werden, so dass ein Einpressen des Zapfens möglich ist.

Es ist vorteilhaft, wenn die Fixierscheibe aus austenitischem, austenitisch-ferritischem oder austenitischem und gehärtetem Edelstahl oder aus Federstahl (in Ausführung, die nicht korrosionsbeständig ist) hergestellt wird. Bei einer Federstahlausführung ist die Oberfläche bevorzugt mit einer Korrosionsschutzschicht versehen, was dem Korrosionsschutz dient. Bevorzugt ist eine solche Korrosionsschutzschicht als Zink-Lamellenschicht ausgeführt. Die genannten Materialausführungen und Beschichtungen sind geeignet um ein Bauteil zu erzielen, welches den rauen Einsatzbedingen in einer Bremse standhält und Funktionssicherheit zuverlässig und dauerhaft gewährleistet.

Bevorzugt ist das Material des Zapfens oder zumindest seine Oberfläche weicher als das Material der Fixierscheibe oder zumindest der Klemmkante. Dadurch kann sich die Klemmkante leichter in die Oberfläche des Zapfens krallen, einschneiden oder eingraben. Dadurch wird die Blende sicher gehalten.

Selbstverständlich kann die Befestigung der Blende an der Tragkonstruktion des Bremssattels auch mit Hilfe von mehr als einer der oben beschriebenen Anordnung, umfassend Bohrung, Zapfen und Fixierscheibe, erfolgen.

Bevorzugt ist die Blende mit dem Zapfen bzw. mit den Zapfen einstückig verbunden. Bevorzugt sind Blende zusammen mit dem Zapfen bzw. den Zapfen als ein Gußteil, bevorzugt als ein Aluminiumdruckgußteil hergestellt.

Die Montage der Bauteile in die Bohrung erfolgt günstigerweise nach folgendem Ablauf: Die Fixierscheibe wird auf einen Montagedorn aufgesteckt und in die Bohrung eingeführt bis sich die Fixierscheibe in der Position befindet, in welcher sie in der Bohrung formschlüssig gehalten wird. Alternativ ist auch ein Einbringen der Fixierscheibe ohne Montagedorn oder mit einem anderen Werkzeug möglich. Bei der Ausgestaltung des Formschlusses als Nut, ist das Einbringen der Fixierscheibe mittels Montagedorn, bis die Fixierscheibe mit ihrem Scheibenrand in der Nut einschnappt, bevorzugt. Anschließend erfolgt das Aufsetzen der Blende, wobei der oder die Zapfen in die jeweilige Bohrung eingeführt werden und durch die Durchgangsöffnung der jeweiligen Fixierscheibe hindurchgepresst werden, wodurch die Klemmwirkung auf den bzw. die Zapfen, wie oben bereits beschrieben, hervorgerufen wird.

Der zweite Aspekt der Erfindung bezieht sich auf die Fixierscheibe. Die erfindungsgemäße Fixierscheibe wurde bereits vorstehend beschrieben. Sie wird auch nachfolgend bei der Beschreibung eines Ausführungsbeispiels wiederholend oder ergänzend beschrieben. Wenn im Zusammenhang mit der Fixierscheibe Bezug auf den Bremssattel und die von dem Bremssattel umfassten Teile Bezug genommen wird, so beziehen sich diese Bezüge darauf, die unterschiedlichen Elemente der Fixierscheibe klar zu definieren, beispielsweise um die Vorteile der unterschiedlichen Elemente des Führungselements gegenüber dem Stand der Technik darzustellen.

Die Erfindung wird nachfolgend unter Bezugnahme auf die beigefügten schematischen Figuren näher erläutert. Es handelt sich dabei um die Erläuterung eines bevorzugten Ausführungsbeispiels der Erfindung. Der Übersichtlichkeit wegen sind nicht immer alle dargestellten Elemente in einer Figur auch mit einem Bezugszeichen versehen. Entsprechende Elemente oder Bereiche sind dann aber mindestens in einer anderen Figur gekennzeichnet und die Bedeutung ist dort zu entnehmen.
- Fig. 1: zeigt den Bremssattel mit Blende und Fixierscheiben in einer Explosionsdarstellung

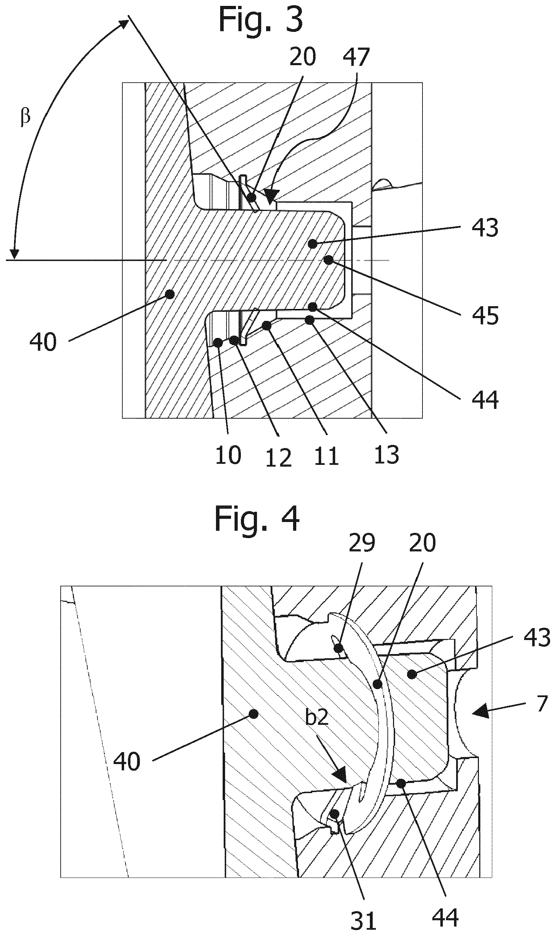

- Fig. 2 und 3: zeigen einen Brückenfinger mit montierter Blende in einer Schnittdarstellung
- Fig. 4: zeigt einen Ausschnitt des in die Bohrung eingesteckten und fixierten Zapfens in einer perspektivischen Schnittdarstellung

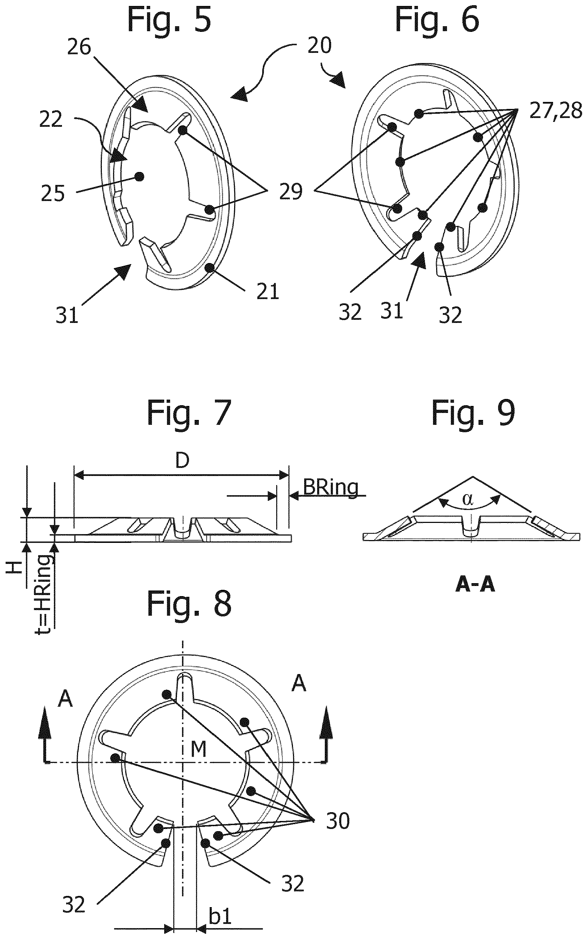

- Fig. 5 und 6: zeigen die Fixierscheibe in perspektivischer Darstellung
- Fig. 7 und 8: zeigen die Fixierscheibe in zweidimensionaler Projektionsdarstellung
- Fig. 9: zeigt die Fixierscheibe in zweidimensionaler Schnittdarstellung

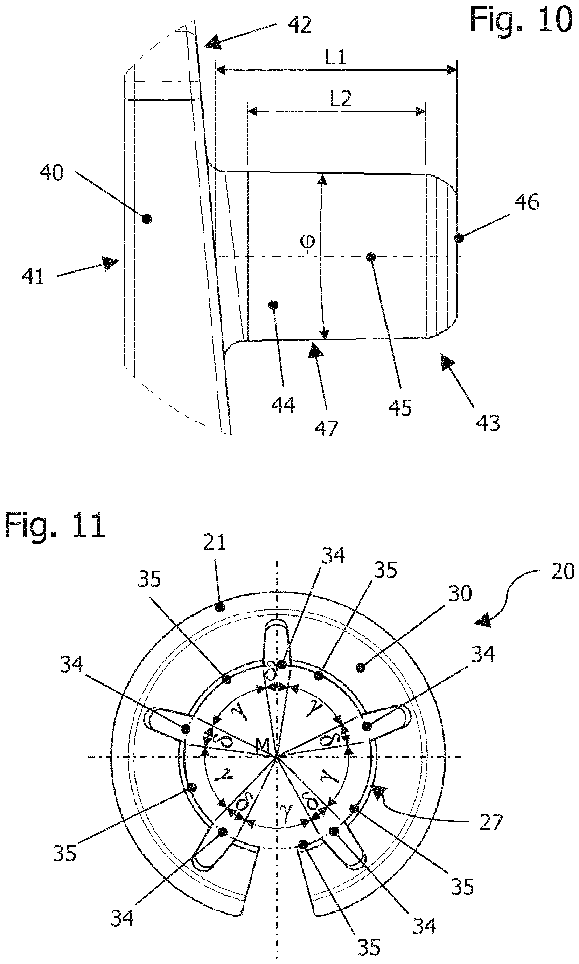

- Fig. 10: zeigt den Zapfen in vergrößerter Darstellung
- Fig. 11: zeigt die Fixierscheibe in vergrößerter zweidimensionaler Projektionsdarstellung

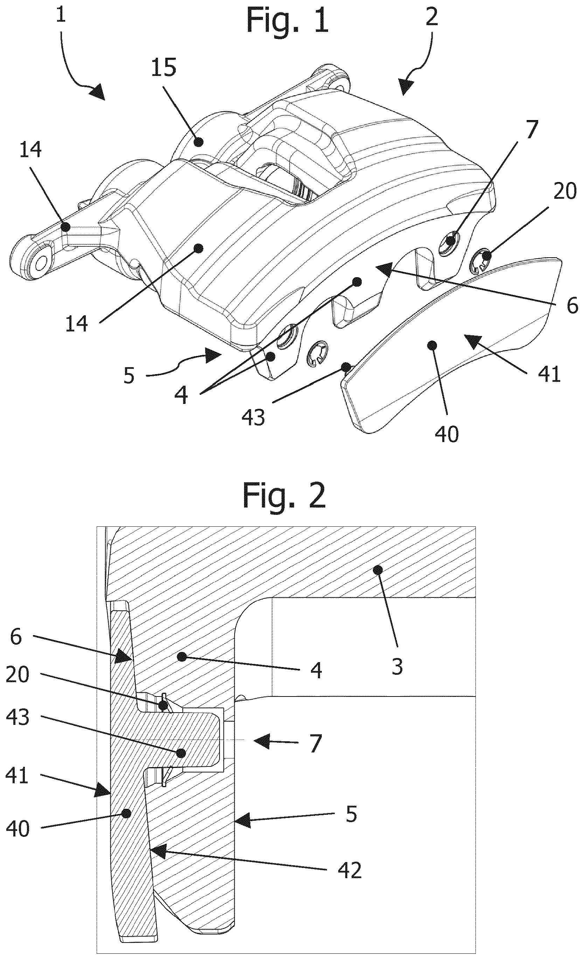

In der Fig. 1 ist zu sehen, dass der Bremssattel 1 eine Tragkonstruktion 2 und eine Blende 40, die mittels zwei Fixierscheiben 20 an der Tragkonstruktion 2 befestigt ist, aufweist. Die Tragkonstruktion 2 umfasst einen Anschlussbereich 14, einen Bremszylinderbereich 15, eine von dem Anschlussbereich 14 auskragende Brücke 3 und drei Brückenfinger 4, die sich in einer Reihe beabstandet voneinander unter einem rechten Winkel an die Brücke 3 anschließen und dem Bremszylinderbereich 15 gegenüberliegen. Die Tragkonstruktion ist ein Metallgußteil. Die Brückenfinger 4 weisen jeweils eine Außenseite 6 und eine Bremsbelagseite 5 auf, die sich gegenüberliegen und die Brückenfinger in ihrer Dicke begrenzen. Die Bremsbelagseite 5 ist die Seite, welche dem Bremszylinderbereich 15 zugewandt ist. Die Außenseiten 6 bilden auch gleichzeitig eine äußere Begrenzung des Bremssattels 1. Die Außenseiten 6 bilden im vorliegenden Ausführungsbeispiel eine ebene Anlagefläche, gegen welche die Blende 40 mit einer Anlageseite 42 im montierten Zustand anliegt. Dies ist bspw. aus der Fig. 2 ersichtlich. Nach der Montage ist die Außenseite 6 der Brückenfinger 4 durch die Blende 40 abgedeckt und die Sichtseite 41 der Blende 40 bildet hier den Abschluss des Bremssattels 1. Die beiden äußeren Brückenfinger 4 weisen jeweils eine Bohrung 7 in identischer Ausgestaltung auf. Die Blende 40 überdeckt alle drei Brückenfinger 4. Die Blende 40 weist auf ihrer Anlageseite 42 zwei Zapfen 43 auf, die jeweils in einer Bohrung 7, welche jeweils in die Außenseite 6 der beiden äußeren Brückenfinger 4 eingebracht ist, eingesteckt sind. In ihrem Verlauf weist jede der beiden Bohrungen 7 in ihrem Verlauf in den jeweiligen Brückenfinger 4 hinein bzw. durch ihn hindurch nach einem Drittel der Brückenfingerdicke eine Bohrungsringnut 8 auf. Zwischen den Zapfen 43 und der jeweiligen Bohrung 7 befindet sich jeweils eine Fixierscheibe 20. Da die Bohrungen 7, die Fixierscheiben 20 und auch die Einbausituationen bezogen auf Zapfen 43, Fixierscheibe 20 und Bohrung 7 identisch sind, ist die nachfolgende Beschreibung im Singular ausgeführt.

Die Fixierscheibe 20 hat eine kreisförmige Außenkontur mit einem Außendurchmesser D. Außerdem weist sie einen Scheibenrand 21 auf, der ringförmig ausgehend vom Außendurchmesser D radial nach innen verlaufend eine Ringbreite BRing hat. Der Scheibenrand 21 ist flach ausgebildet und seine Höhe HRing ist gleich der Materialdicke t der Fixierscheibe 20. Die Scheibenmitte 22 weist einen gegenüber dem Scheibenrand 21 ausgebuchteten Klemmbereich 26 auf, so dass die Gesamthöhe H der Fixierscheibe 20 größer ist als die Materialdicke t. Die Ausbuchtung 26 hat die Form eines hohlen Kegelstumpfes, wobei der Kegelöffnungswinkel α vorzugsweise 122° beträgt. Der Winkel α kann aber auch einen anderen Wert bevorzugt zwischen 100° und 140° und bevorzugter zwischen 110° und 130° haben. Dieses Winkelmaß liegt in einem weder in die Bohrung 7 eingesetzten, noch auf den Zapfen 43 aufgesteckten Zustand der Fixierscheibe 20 vor, d.h. in einem Zustand, in welchem die Fixierscheibe 20 nicht durch einen Einbau verformt ist. In der Scheibenmitte 22 befindet sich eine kreisförmige Durchgangsöffnung 25, die eine umlaufende Klemmkante 27 bildet.

Ausgehend von der Durchgangsöffnung 25 und in Richtung des Scheibenrands 21 radial verlaufend befinden sich mehrere Einschnitte 29. Diese Einschnitte 29 sind beabstandet voneinander und entlang der Klemmkante 27 gleichmäßig verteilt angeordnet. Die Einschnitte 29 schneiden jeweils den ausgebuchteten Klemmbereich 26 ein und unterteilen die Klemmkante 27 in mehrere Unterbrechungsabschnitte 34, in welchem die Klemmkante 27 unterbrochen, bzw. ausgespart ist und in mehrere Klemmkantenabschnitte 28 und bilden entsprechend mehrere Klemmabschnitte 30.

Die Unterbrechungsabschnitte 34 erstrecken sich jeweils über einen Winkel δ und die Klemmkantenabschnitte 28 erstrecken sich jeweils über einen Winkel γ. Die Klemmkantenabschnitte 28 drücken im montierten Zustand die dort vorhandene Klemmkante 27 gegen den Zapfen 43. Die Einschnitte 29 verlaufen, bezogen auf den Fixierscheibenmittelpunkt M, radial nach außen. Die Einschnitte 29 durchtrennen jeweils die Fixierscheibe 20 im äußeren Bereich nicht. Sie laufen nicht bis in den Scheibenrand 21 hinein. D.h. die Einschnitte 29 befinden sich innerhalb des ausgebuchteten Klemmbereichs 26. Bevorzugt ist der Winkel γ in etwa 3 Mal größer als der Winkel δ. Es sind aber auch andere Größenverhältnisse möglich. Vorzugsweise ist der Winkel γ mindestens zwei Mal größer als der Winkel δ . Noch bevorzugter ist der Winkel γ mindestens drei Mal größer als der Winkel δ. Durch die größeren Klemmkantenanteile ergibt sich ein besonders sicherer Halt für die Blende 40. Trotz der Unterbrechungen ist auf diese Weise umlaufend um den Zapfen 43 ein hoher Anteil an klemmender Klemmkante 27 mit den Klemmkantenabschnitten 28 gegeben. Die angegebenen Winkel γ und δ haben ihren Scheitelpunkt jeweils deckungsgleich auf dem Mittelpunkt M der Fixierscheibe 20 liegen. Im vorliegenden Ausführungsbeispiel sind 5 Einschnitte 29 gleichmäßig über 360° verteilt angeordnet.

Durch die Einschnitte 29 bilden sich mehrere Klemmabschnitte 30, die jeweils mit einem Klemmkantenabschnitt 28 auf den Zapfen 43 drücken oder sich in die Zapfenumfangsfläche 44 des Zapfens 43 hineindrücken. Die Klemmabschnitte 30 sind gleich Federschenkel, die aufgrund von elastischer Verformung eine Klemmkraft aufbringen und so eine Klemmkraft auf den Zapfen 43 aufbringen. Zumindest sind die Klemmabschnitte 30 in einem bestimmten Auslenkbereich elastisch auslenkbar.

Durch die Einschnitte 29 ist die Fixierscheibe 20 flexibler elastisch verformbar. Dies erleichtert die Montage und erhöht die Funktionssicherheit auch bei möglichen Fertigungstoleranzen.

Die Breite der Einschnitte 29 nimmt jeweils ausgehend von der Durchgangsöffnung 25 in Richtung des Scheibenrands 21 ab. Dadurch werden die Klemmabschnitte 30 steifer und erzielen eine höhere Klemmkraft. Die tiefste Stelle der Einschnitte 29 ist jeweils halbrundförmig ausgebildet. D.h. die Seitenflanken der Einschnitte 29 laufen jeweils tangential in den halbrundförmigen Einschnittgrund ein. Diese Ausgestaltung erhöht insbesondere die Dauerfestigkeit des Bauteils im Hinblick auf die Schwingungsbelastung im Bereich der Bremse. Dies begünstigt wiederum einen dauerhaften Halt. Diese Ausgestaltung damit kombiniert, dass sich die Einschnitte nicht in die gesamte Ausbuchtung 26 hineinziehen und nicht komplett bis an den Scheibenrand 21 grenzen, sondern dass die tiefste Stelle der Einschnitte 29 jeweils innerhalb der Ausbuchtung 26 liegt, erhöht nochmals die Steifigkeit und somit die Haltesicherung der Blende 40. Dies hat auch den Vorteil, dass sich die Fixierscheibe 20 bei der Montage aufgrund einer guten Steifigkeit nicht in unerwünschter Weise verbiegt. So lässt sie sich gut montieren.

Ferner weist die Fixierscheibe 20 einen die Materialdicke t durchtrennenden und von der Durchgangsöffnung 25 bis zum Außendurchmesser D durchlaufenden Schlitz 31 auf. Bei einem nicht in die Bohrung 7 und nicht auf den Zapfen 43 montierten Zustand der Fixierscheibe 20, weist der Schlitz 31, gemessen an dem Übergang zur Durchgangsöffnung 25, eine Breite b1 auf. Bei einem in die Bohrung 7 und auf den Zapfen 43 montierten Zustand der Fixierscheibe 20, weist der Schlitz 31, gemessen an dem Übergang zur Durchgangsöffnung 25, eine Breite b2 auf. b2 ist kleiner als b1. D.h. durch den Einbau der Fixierscheibe 20 in die Bohrung, bzw. in die Nut 8, wird die Schlitzbreite reduziert und die Fixierscheibe 20 vorgespannt, was der Klemmwirkung auf den Zapfen 43 zugutekommt. Der Schlitz 31 ist keilförmig ausgebildet. Entsprechend keilförmig sind die Schlitzkanten 32 der Fixierscheibe 20 zueinander ausgerichtet und verlaufen jeweils radial auf den Fixierscheibenmittelpunkt M zu. Der Schlitz 31 ist zwischen zwei Einschnitten 29 angeordnet, wodurch die Klemmkante 27 zusätzlich unterteilt wird.

Der Zapfen 43 verjüngt sich ausgehend von der Anlageseite 43 hin zu dem Zapfenende 46 in einem Haltebereich 47, welcher sich über eine Länge L2 erstreckt, konusförmig. In diesem Haltebereich 47 hat die Fixierscheibe 20, bzw. die Klemmkante 27 der Fixierscheibe 20 im fertig montierten Zustand Klemmkontakt mit dem Zapfen 43. Diese konische Verjüngung hat den Vorteil, dass sich die Bauteile leichter montieren lassen. D.h. der Zapfen 43 kann so leichter durch die Durchgangsöffnung 25 geschoben werden. Lässt sich der Zapfen 43 zunächst mit seinem Zapfenende 46 leicht in die Durchgangsöffnung 25 einführen, so entfaltet sich dennoch aufgrund des zunehmenden Zapfendurchmessers ein fester Sitz in der Endmontageposition des Zapfens 43. Auf diese Weise werden die Klemmabschnitte 30 bei der Montage auch nicht unnötig weit aufgebogen, wenn z.B. die Montage mit einer gewissen Prozessgeschwindigkeit erfolgt, sondern die Klemmabschnitte 30 werden bei der Montage nicht überdehnt und haben so in der montierten Endposition die beste Klemmkraft.

Der Zapfen 43 hat eine Gesamtlänge L1. Bevorzugt hat der Haltebereich 47 mit seiner Länge L2 einen längenmäßigen Anteil an der Gesamtlänge L1 von wenigstens 0,7. Es ist aber auch möglich, dass das Längenverhältnis von L2 zu L1 mindestens größer als 0,5 ist oder vorzugsweise mindestens 0,6 ist. Auf diese Weise ist der oben beschriebenen Montagevorteil (leichtes Einführen des Zapfenendes 46, sicherer Halt im Haltebereich 47 und Vermeidung der Überdehnung der Klemmabschnitte 30) gut zu erreichen.

In der Darstellung einer Parallelprojektion schließen die konisch verlaufenden Flanken des Zapfens 43 einen Winkel ϕ ein. In dem vorliegenden Ausführungsbeispiel beträgt der Winkel ϕ 2°. Es sind aber auch Winkel größer oder gleich 1° und kleiner oder gleich 3° möglich.

Die sich verjüngende, konische Form ist besonders in Verbindung mit der relativ steif ausgestalteten Fixierscheibe 20, mit den verhältnismäßig zur Einschnittbreite der Einschnitte 29 breit ausgestalteten Klemmabschnitten 30 mit ihren Klemmkantenabschnitten 28, geeignet, da die Klemmabschnitte 30 durch die Konusform des Zapfens 43 quasi nach dem Keilprinzip auseinandergedrückt werden, so dass ein Einpressen des Zapfens 43 gut möglich ist.

Zwischen der Außenseite 6 der Brückenfinger 4 und der Bohrungsnut 8 befindet sich ein Bohrungsabschnitt 10, in welchem sich die Bohrung 7 in Richtung der Bremsbelagseite 5 konisch verjüngt. Zwischen dieser Verjüngung 10 und der Nut 8 befindet sich außerdem noch ein zylindrischer Bohrungsabschnitt 12. Aufgrund dieser Ausgestaltung ergibt sich eine günstige Montagesituation um die Fixierscheibe 20 in die Einrastposition in die Nut 8 bringen zu können. Dies kann bspw. in der Weise geschehen, dass die Fixierscheibe 20 mit Hilfe des Zapfens 43 über den sich verjüngenden Bohrungsabschnitt 10 in die Nut 8 gezwungen wird.

Der zylindrische Bohrungsabschnitt 12 sorgt für eine ausreichende Festigkeit der Nutwand 9, welche entgegen der Auszugrichtung des Zapfens 43 aus der Bohrung 7 den nötigen Halt bieten muss. Durch den zylindrischen Bohrungsabschnitt 12 ist gewährleistet, dass die betreffende Nutwand 9 aufgrund von Fertigungstoleranzen in ihrer Tragfläche nicht geschwächt wird. Die axiale Erstreckung des zylindrischen Bohrungsabschnitts 12 ist etwas kleiner als die axiale Erstreckung der Verjüngung 10. Dadurch wird erreicht, dass die nötige Festigkeit erzielt wird, ohne dass auf den Montagevorteil, welcher durch den konischen Abschnitt 10 gegeben ist, verzichtet werden muss.

Zwischen der Nut 8 und der Bremsbelagseite 5 befindet sich ebenfalls ein Abschnitt 11, in welchem sich die Bohrung 7 in Richtung der Bremsbelagseite 5 konisch verjüngt. Diese Verjüngung 11 schützt die Fixierscheibe 20 vor einem übermäßigen Aufbiegen des ausgebuchteten Klemmbereichs 26 oder vor einem Durchrutschen in Richtung der Bremsbelagseite 5 bei der Montage. An die Verjüngung 11 schließt sich in Richtung der Bremsbelagseite 5 ein weiterer zylindrischer Bohrungsabschnitt 13 an, in welchem der Zapfen 43 aufgenommen ist.

Die Fixierscheibe 20 ist mit ihrem Scheibenrand 21 in die Bohrungsringnut 8 der Bohrung 7 eingesetzt und wird formschlüssig, gegen ein axiales Herausrutschen der Fixierscheibe 20 aus der Bohrung 7 gesichert, in der Bohrung 7 gehalten. Die Fixierscheibe 20 ist dabei so in die Bohrung 7 eingesetzt, dass der Klemmbereich 26 in Richtung der Bremsbelagseite 5 ausgebuchtet ist. Der Zapfen 43 steckt in der Bohrung 7 und ragt durch die Durchgangsöffnung 25 der Fixierscheibe 20 hindurch. Die Klemmabschnitte 30 klemmen dabei den Zapfen 43 mit den Klemmkantenabschnitten 28 fest und drücken sich in die Zapfenumfangsfläche 44 des Zapfens 43 ein. Die Klemmabschnitte 30 sind so ausgerichtet, dass sie jeweils schräg an die Zapfenumfangsfläche 44 angreifen bzw. schräg zur Zapfenlängsachse 44 ausgerichtet sind.

Aufgrund dieser Ausrichtung drücken die Klemmkanten 27 optimal gegen bzw. in die Zapfenumfangsfläche 44 und verhindern ein Lösen des Zapfens 43 und somit auch der Blende 40.

Mit dem vorstehend beschriebenen Aufbau wird ein zuverlässiges und dauerhaftes Halten der Blende 40 an der Tragkonstruktion 2 bzw. an den Brückenfingern 4 erreicht. Selbst Vibration führen nicht zu einem Lösen der Blende 40. Im Gegenteil arbeiten sich bei dem Vorliegen von Vibrationen die Klemmkantenabschnitten 28 mit ihren Klemmkanten 27 nur noch weiter in Zapfenumfangsfläche 44 hinein und sorgen für eine zuverlässige Verliersicherheit.

## Patentansprüche

1. Bremssattel (1) für eine Scheibenbremse umfassend
- eine Tragkonstruktion (2) mit einer Brücke (3) und wenigstens einem Brückenfinger (4), welcher eine Bremsbelagseite (5), eine Außenseite (6) und eine in die Außenseite (6) eingebrachte Bohrung (7) aufweist, die von der Außenseite (6) in Richtung der Bremsbelagseite (5) verläuft,
- eine Blende (40) mit einem in die Bohrung (7) ragenden Zapfen (43)
- eine Fixierscheibe (20) mit einem Scheibenrand (21), welcher einen Außendurchmesser D hat und welcher in der Bohrung (7) formschlüssig gehalten wird und mit einer Scheibenmitte (22), die eine Durchgangsöffnung (25), insbesondere kreisförmige Durchgangsöffnung (25), durch welche der Zapfen (43) hindurchragt, aufweist,
wobei die Scheibenmitte (22) einen gegenüber dem Scheibenrand (21) in Richtung der Bremsbelagseite (5) ausgebuchteten Klemmbereich (26) aufweist, welcher den Zapfen (43) in der Durchgangsöffnung (25) mit einer Klemmkante (27), insbesondere einer kreisförmigen Klemmkante (27) festklemmt.

2. Bremssattel (1) nach Anspruch 1,
wobei die Bohrung (7) eine Nut (8), insbesondere eine Ringnut, aufweist, in welcher der Scheibenrand (21) eingreift.

3. Bremssattel (1) nach Anspruch 2,
wobei die Bohrung (7) zwischen der Außenseite (6) und der Nut (8) einen Abschnitt (10) aufweist, in welchem sich die Bohrung (7) in Richtung der Bremsbelagseite (5) verjüngt, insbesondere konisch,
und/oder
wobei die Bohrung (7) zwischen der Nut (8) und der Bremsbelagseite (5) einen Abschnitt (11) aufweist, in welchem sich die Bohrung (7) in Richtung der Bremsbelagseite (5) verjüngt, insbesondere konisch.

4. Bremssattel (1) nach Anspruch 2,
wobei die Bohrung (7) zwischen der Außenseite (6) und der Nut (8) einen Abschnitt (10) aufweist, in welchem sich die Bohrung (7) in Richtung der Bremsbelagseite (5) verjüngt, insbesondere konisch, und wobei zwischen dieser Verjüngung (10) und der Nut (8) ein zylindrischer Bohrungsabschnitt (12) vorhanden ist, dessen axiale Erstreckung insbesondere kleiner oder gleich der axialen Erstreckung der Verjüngung (10) ist
und/oder
wobei die Bohrung (7) zwischen der Nut (8) und der Bremsbelagseite (5) einen Abschnitt (11) aufweist, in welchem sich die Bohrung (7) in Richtung der Bremsbelagseite (5) verjüngt, insbesondere konisch, und wobei sich diese Verjüngung (11) unmittelbar an die Nut (8) anschließt.

5. Bremssattel (1) nach einem der vorangehenden Ansprüche,
wobei die Fixierscheibe (20) eine Materialdicke t aufweist, die sich von einer ersten Seite (23) hin zu einer zweiten Seite (24) der Fixierscheibe (20) erstreckt,
wobei die Fixierscheibe (20) eine Höhe H aufweist, welche aufgrund des ausgebuchteten Klemmbereichs (26) größer ist als die Materialdicke t.

6. Bremssattel (1) nach Anspruch 5,
wobei der ausgebuchtete Klemmbereich (26) die Form eines hohlen Kegelstumpfes aufweist, wobei insbesondere der Kegelöffnungswinkel α in einem nicht in die Bohrung (7) und nicht auf den Zapfen (43) montierten Zustand der Fixierscheibe (20) zwischen 100° und 140°, insbesondere zwischen 110° und 130° liegt und
wobei der Scheibenrand (21) zwischen dem Außendurchmesser D und dem ausgebuchteten Klemmbereich (26) ringförmig mit einer Höhe HRing, die gleich der Materialdicke t ist, ausgebildet ist.

7. Bremssattel (1) nach einem der vorangehenden Ansprüche,
wobei ausgehend von der Durchgangsöffnung (25) wenigstens ein in Richtung des Scheibenrands (21) verlaufender Einschnitt (29), insbesondere radial verlaufend, den ausgebuchteten Klemmbereich (26) einschneidet,
wobei der Einschnitt (29) entlang der Klemmkante (27) einen Unterbrechungsabschnitt (34), der sich über einen Winkel δ erstreckt und einen Klemmkantenabschnitt (35), der sich über einen Winkel γ erstreckt, bildet,
wobei der Winkel γ größer ist als der Winkel δ, insbesondere mindestens zwei Mal größer, insbesondere mindestens drei Mal größer,
wobei die Scheitelpunkte der Winkel γ und δ jeweils in der Scheibenmitte M liegen.

8. Bremssattel (1) nach Anspruch 7,
wobei mehrere Einschnitte (29), insbesondere fünf, vorhanden sind, wodurch entsprechend mehrere Unterbrechungsabschnitte (34), insbesondere fünf, und entsprechend mehrere Klemmkantenabschnitte (35), insbesondere fünf, gegeben sind.

9. Bremssattel (1) nach einem der Ansprüche 7 bis 8,
wobei die Breite des wenigstens eines Einschnitts (29) oder aller Einschnitte (29) ausgehend von der Durchgangsöffnung (25) in Richtung des Scheibenrands (21) abnimmt.

10. Bremssattel (1) nach einem der Ansprüche 7 bis 9,
wobei die tiefste Stelle des wenigstens einen Einschnitts (29) oder alle Einschnitte (29) halbrundförmig ausgebildet ist.

11. Bremssattel (1) nach einem der Ansprüche 5 bis 10,
wobei die Fixierscheibe (20) einen die Materialdicke t durchtrennenden und von der Durchgangsöffnung (25) bis zum Außendurchmesser D durchlaufenden, insbesondere keilförmigen, Schlitz (31) aufweist,
wobei der Schlitz (31) in einem nicht in die Bohrung (7) und nicht auf den Zapfen (43) montierten Zustand der Fixierscheibe (20), gemessen an dem Übergang zur Durchgangsöffnung (25), eine Breite b1 aufweist,
wobei der Schlitz (31) in einem in die Bohrung (7) und auf den Zapfen (43) montierten Zustand der Fixierscheibe (20), gemessen an dem Übergang zur Durchgangsöffnung (25), eine Breite b2 aufweist und wobei b2 kleiner als b1 ist.

12. Bremssattel (1) nach Anspruch 11,
wobei der Schlitz (31) im Verlauf eines Klemmkantenabschnitts (28) angeordnet ist und diesen durchtrennt.

13. Bremssattel (1) nach einem der vorangehenden Ansprüche,
wobei sich der Zapfen (43) ausgehend von der Anlageseite (42) hin zu dem Zapfenende (46) in einem Haltebereich (47), welcher sich über eine Länge L2 erstreckt, verjüngt, insbesondere konisch,
wobei der Zapfen (43) eine Gesamtlänge L1 hat,
wobei der Haltebereich (47) den größten längenmäßigen Anteil an der Gesamtlänge L1 hat, wobei insbesondere das Längenverhältnis von L2 zu L1 größer als 0,5 ist, insbesondere größer oder gleich 0,6 und insbesondere größer oder gleich 0,7 ist.

14. Bremssattel (1) nach einem der vorangehenden Ansprüche,
wobei das Material des Zapfens (43), insbesondere seine Oberfläche, weicher ist als das Material der Fixierscheibe (20), insbesondere der Klemmkante (27).

15. Fixierscheibe (20) gemäß einem der vorangehenden Ansprüche 1 oder 5 bis 12 für einen Bremssattel (1) gemäß einem der vorangehenden Ansprüche.
